# FASCICULE DE BREVET EUROPEEN

(11) **EP 2 965 148 B1**
(45) Date de publication et mention de la délivrance du brevet: **10.01.2018**
(21) Numéro de dépôt: 14713537.0
(22) Date de dépôt: 06.03.2014
(51) Int. Cl.: G02F 1/15, B60R 1/08, G02F 1/155

(54) **DISPOSITIF ELECTROCHROME A TROIS OU QUATRE COUCHES**
ELEKTROCHROME VORRICHTUNG MIT DREI ODER VIER SCHICHTEN
ELECTROCHROMIC DEVICE COMPRISING THREE OR FOUR LAYERS

(30) Priorité: 07.03.2013 FR 1352045
(43) Date de publication de la demande: 13.01.2016
(73) Titulaire: Centre National de la Recherche Scientifique (C.N.R.S.), 75016 Paris (FR)
(72) Inventeur: DANINE, Abdelaadim, F-33170 Gradignan (FR); FAURE, Cyril, F-24310 Bourdeilles (FR); CAMPET, Guy, F-33610 Canejan (FR); ROUGIER, Aline, F-33600 Pessac (FR)
(74) Mandataire: Goulard, Sophie
(86) Numéro de dépôt international: PCT/FR2014/050507
(87) Numéro de publication internationale: WO 2014/135804

(56) Documents cités:
- US-A1- 2003 179 432
- US-A1- 2007 020 442
- US-A1- 2008 212 160
- US-A1- 2010 265 562

## Description

La présente invention concerne un dispositif électrochrome, ainsi que ses diverses applications, notamment pour l'affichage.

Les dispositifs électrochromes, assimilables à des batteries optiques, modifient leurs propriétés optiques sous l'effet d'un champ électrique, permettant d'obtenir ainsi des revêtements à commandes électriques facilement ajustables. Depuis la première commercialisation à la fin des années 80 et jusque très récemment, leurs applications concernaient principalement le domaine du visible. Les plus courantes sont les rétroviseurs automobiles, les visières de casque moto, les fenêtres de toit pour l'automobile, et plus récemment le vitrage de bâtiments. Des applications dans le domaine de l'infrarouge se développent de plus en plus, telles que la protection thermique (application spatiale pour satellites), et le camouflage infrarouge dans le domaine militaire.

Les dispositifs électrochromes sont généralement constitués de cinq couches emprisonnées entre deux supports : une couche d'un matériau électrolyte séparant deux couches de matériaux d'électrodes, dont au moins un est un matériau électrochrome (à coloration anodique ou cathodique), lesdites électrodes étant chacune en contact, par leur face externe, avec une couche d'un matériau collecteur de courant et transparent dans le visible. Ces dispositifs sont généralement schématisés par la chaine galvanique suivante : Substrat 1 / TCO / EC1 /I/ EC2 / TCO / Substrat 2 dans laquelle au moins un des substrats 1 et 2 est un matériau transparent choisi notamment parmi le verre, le plastique, etc... l'autre substrat pouvant être opaque (papier par exemple) ou réflecteur (métal par exemple), etc..., TCO est un oxyde transparent conducteur (de la dénomination anglophone *« Transparent Conductive Oxide* ») utilisé comme collecteur de courant, EC est une couche d'un oxyde électrochrome à conduction mixte (ionique et électronique) et I est un matériau électrolyte à conduction ionique. Cette chaine galvanique est également appelée « cellule électrochrome ».

Un dispositif électrochrome fonctionne comme une batterie, c'est-à-dire que l'on peut le charger ou le décharger, *via* l'intermédiaire des couches conductrices TCO déposées sur le support. Ces couches conductrices sont en contact avec les matériaux électrochromes qui constituent les deux électrodes EC1 et EC2. L'électrolyte I est la couche qui permet le déplacement des ions entre les deux électrodes EC1 et EC2. Elle sert de conducteur ionique mais doit avoir une très faible conduction électronique. La tension nécessaire au fonctionnement est généralement assez faible, de l'ordre de quelques volts. Suivant le sens du courant que l'on fait passer, le dispositif se colore : la transmission lumineuse diminue, ou se décolore : la transmission lumineuse augmente, et ce grâce aux modifications des propriétés optiques des matériaux électrochromes des électrodes EC1 et EC2.

Dans le domaine du visible, la sensation de couleur associée aux dispositifs électrochromes reste subjective et peut varier fortement d'un individu à un autre. C'est pourquoi, les indicateurs spécifiques des performances électrochromes sont généralement décrits à partir de la mesure des spectres de transmission (T), d'absorption (A) ou de réflexion (R) des cellules électrochromes. De façon très simplifiée, ces trois grandeurs sont reliées par la relation suivante : **R + T + A = 1.**

Pour les dispositifs électrochromes, on distingue deux types de fonctionnement :
1) un fonctionnement en mode transmission pour lequel la cellule laisse passer le rayon incident et il n'y a pratiquement pas de lumière réfléchie dans la cellule **(R** = **0)** d'où : **T** + **A** = **1.** Dans ce cas, la contre électrode EC2 est un matériau électrochrome de couleur complémentaire ou neutre.
2) un fonctionnement en mode réflexion, pour lequel la cellule électrochrome est opaque et renvoie le rayon incident sous la forme d'un rayon réfléchi **(T = 0)** d'où : **R+A=1.**

Les oxydes utilisables à titre de TCO dans les dispositifs électrochromes possèdent une transparence optique dans le visible, ainsi qu'une conductivité électrique élevée (>10³ S.cm⁻¹). La plupart de ces oxydes sont des conducteurs de type n, possédant une bande interdite de largeur supérieure à 3 eV. L'état de l'art dans le domaine des TCO (visible) correspond à une conductivité électrique de l'ordre de 10⁴ S.cm⁻¹, associée à une transmission moyenne de l'ordre de 85 % dans le visible. Pour atteindre cette transmission, les couches de TCO sont généralement de faible épaisseur, de l'ordre de 150 nm. Les résistances typiques de ces films sont de l'ordre de 15 Ohms/carré. L'état de l'art et le plus utilisé des TCOs reste l'oxyde d'indium dopé à l'étain In₂O_{3:}Sn (ITO) suivi de près par l'oxyde d'étain dopé fluor SnO₂:F (FTO) et plus récemment l'oxyde de Zinc dopé au gallium ou à l'aluminium.

Les électrolytes des dispositifs électrochromes peuvent être liquides, solides ou sous forme de membranes selon la technologie employée.

L'électrochromisme recouvre une grande variété de composés : des systèmes organiques (viologènes, polymères conducteurs), aux systèmes hybrides (métallophtalocyanines, hexacyanométallates), en passant par une large gamme d'oxydes de métaux de transition (tungstène, molybdène, tantale, iridium, titane, nickel, vanadium) et plus récemment d'hydrures et de métaux (J. N. Huiberts et al., Nature, 1996, 380, 321 ; T. J. Richardson et al., Appl. Phys. Lett., 2002, 78(30), 3047). Parmi ces matériaux électrochromes, WO₃ reste de loin le matériau le plus étudié et le plus commercialisé. Ces oxydes électrochromes sont regroupés en deux familles : (i) les oxydes à coloration cathodique tels que WO₃, qui présentent une coloration à l'état réduit, et (ii) les oxydes à coloration anodique, tels que IrOₓ et NiOₓ, qui sont colorés à l'état oxydé.

Le phénomène de coloration/décoloration dans le domaine du visible ou de modifications des propriétés optiques de façon plus générale, résulte d'un transfert de charge (ions/électrons) entre couches minces. Il peut être formulé à l'aide des équations suivantes (1) et (2) :

<H> + xe⁻ + xM⁺ ↔ MₓH (1)

ou/et

<H> + xM⁻ ↔ MₓH + xe⁻ (2)

où <H> désigne une structure Hôte et M une espèce ionique invitée. En théorie, tous les ions monovalents peuvent satisfaire à la réaction et être considérés comme espèce invitée M ; il en est ainsi de H⁺, Li⁺, Na⁺, K⁺, Ag⁺ et OH⁻. Cependant des considérations de cinétique et de réversibilité électrochimique font que les ions de faibles rayons ioniques tels que H⁺, Li⁺ et OH⁻ sont les plus couramment utilisés.

Les cellules électrochromes fonctionnant avec les ions Li⁺ présentent une analogie flagrante avec les accumulateurs à ions lithium et sont donc ni plus ni moins des batteries en couches minces, dont les propriétés optiques varient de façon réversible avec la charge/décharge. Elles sont toutefois soumises à un nombre plus important de contraintes et critères de mérite. Les caractéristiques idéales d'un système sont bien sûr fonction de l'application recherchée et du domaine d'étude envisagée. Dans le visible, le contraste en transmission entre l'état coloré et décoloré ((T_{b}/T_{c}) : T_{b} = T_{décoloré} (ou T_{bleached} en anglais) et T_{c} = T_{coloré} (ou T_{colored} en anglais)), ainsi que l'efficacité de couleur (CE = log (T_{b}/T_{c})/Q : CE pour la dénomination anglophone « color efficiency », Q = capacité électrochimique du système) associant la capacité électrochimique au contraste en transmission sont les critères les plus importants. Entres autres critères plus spécifiques, il est également important que la vitesse de commutation, qui est définie comme le temps nécessaire pour passer d'un état à un autre, soit rapide et généralement inférieure à la minute pour des surfaces de l'ordre de la centaine de cm². Enfin, il est important que le dispositif électrochimique présente une bonne durabilité, avec un nombre de cycles élevés ( > 10 000 cycles pour l'application vitrage).

Les dispositifs électrochromes à cinq couches tels que décrits ci-dessus sont cependant couteux à fabriquer et ne présentent pas toujours une rapidité de commutation et un contraste optique suffisants. Ils nécessitent par ailleurs une source d'énergie élevée compte tenu de la largeur de la fenêtre de potentiel nécessaire à leur fonctionnement.

C'est pourquoi les inventeurs se sont donné pour but de mettre au point des dispositifs électrochromes qui soient moins couteux et plus aisés à fabriquer tout en minimisant le temps de commutation et l'énergie nécessaire au fonctionnement en comparaison des dispositifs électrochromes connus de l'art antérieur.

Des dispositifs électrochromes similaires sont également connus des documents US2008/212160 et US2007/020442.

La présente invention a donc pour premier objet un dispositif électrochrome comprenant au moins une électrode de travail électrochrome, une contre électrode, un électrolyte solide et éventuellement au plus un collecteur de courant, ledit dispositif comprenant en outre des moyens permettant d'appliquer une tension électrique auxdites électrodes et étant caractérisé en ce que :
- l'électrode de travail comprend un matériau électrochrome renfermant au moins un polymère électrochrome, ladite électrode étant éventuellement en contact avec un collecteur de courant,
- l'électrolyte solide est en contact avec chacune desdites électrodes,
- la contre électrode est un matériau métallique conducteur (MC) dont le potentiel d'oxydoréduction correspond au potentiel haut de la fenêtre de potentiels de fonctionnement dudit dispositif électrochrome.

Un tel dispositif est peu couteux à préparer et présente par ailleurs une vitesse de commutation qui est environ 5 à 10 fois plus rapide que celle de certains systèmes électrochromes usuels. L'utilisation d'un matériau métallique à titre de contre électrode permet de s'affranchir de la nécessité d'utiliser un collecteur de courant qui serait en contact avec la contre électrode, du fait que le matériau métallique constituant la contre électrode est lui-même conducteur. Cela permet au moins de réduire à quatre le nombre maximal de couches présentes dans le dispositif conforme à l'invention. En outre, en utilisant un MC ayant un potentiel d'oxydation adapté, le fonctionnement du dispositif électrochrome ne nécessite qu'une faible tension, celle-ci pouvant par exemple être inférieure à 1 V. De plus, dans le dispositif électrochrome conforme à la présente invention, de nouveaux processus électrochimiques ont été mis en évidence grâce à l'utilisation du MC qui est en contact avec l'électrolyte. Ces systèmes sont novateurs en ce sens qu'ils utilisent des MC s'oxydant et se réduisant réversiblement lors du fonctionnement du dispositif électrochrome. Le mécanisme présent dans les systèmes électrochromes classiques est décrit par l'équation (3) suivante : 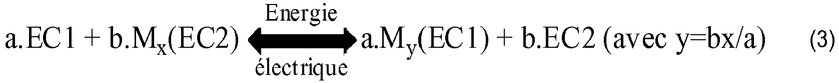 dans laquelle EC1 et EC2 représentent respectivement les matériaux électrochromes des électrodes et M est une espèce ionique invitée. Dans ce cas, M migre réversiblement d'une électrode à l'autre (de EC1 à EC2) *via* l'électrolyte conducteur de l'espèce ionique invitée M.

Dans le dispositif électrochrome conforme à la présente invention, l'espèce ionique invitée est un cation « M⁺ » issu de l'électrolyte (I = M⁺ + P⁻) lequel, réagit réversiblement avec EC1. Simultanément MC s'oxyde réversiblement en libérant MC^{z+} dans l'électrolyte assurant ainsi la neutralité électrique du système. Ainsi, MC joue simultanément les rôles de contre électrode et de collecteur de courant. Ce phénomène peut être représenté par l'équation (4) suivante :

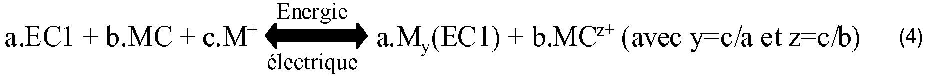

La borne haute de la fenêtre de potentiels de fonctionnement du dispositif électrochrome conforme à l'invention est généralement inférieure à 1,5 V et de préférence inférieure à 0,7 V.

Selon l'invention, les polymères électrochromes de l'électrode de travail peuvent notamment être choisis parmi le poly(3,4-éthylène dioxythiophène) (PEDOT), le poly(3,4-éthylène dioxysélénophène) (ou PEDOS), le poly(3,4-propylène dioxythiophène) (ou PProDOT), le 4,7-bis-(2,3-dihydrothiéno[3,4-b][1,4]dioxin-5-yl)-2-phényl-1H-benzo[d]imidazole (ou BImBEd), le 1,4-bis-(2-(3,4-éthylènedioxy)thiényl)benzène (ou BEDOT-B), les copolymères à base de pyrrole et de 3,4-éthylènedioxythiophène (ou EDOT) tels que le poly(2,2'-di-pyrrol-1-yl-[4,4']bithiazolyl-*co*-EDOT (ou PyDBTH-*co*-EDOT), les copolymères de 4-aminodiphénylamine et de 4,4'-diaminodiphénylsulfone (ou DAPsone), l'acide poly[2,5-di(2-thiényl)-1H-pyrrole-1-(p benzoïque)] (ou poly-DPB), les polymères de la famille des alkylcarbazoles tels que les poly(9H-N-alkylcarbazoles) (ou poly(9-NAC), les poly(3,6-dinitro-9H-N-alkylcarbazoles) (ou poly(3,6-DN-9-NAC)), les poly(3,6-diamino-9H-N-alkylcarbazoles) (ou poly(3,6-DA-9-NAC)) dans lesquels le radical alkyle peut par exemple être un radical méthyle ; les copolymères de tris-[4-(2-thiényl)phényl]amine (TTPPA) et de 2,2'-bithiophène (BT), la poly(tris(4-sélèn-2-yl)phénylamine (PTSePA), la poly(2,3,5,6-tetrafluoroaniline) (PTFA), le poly(3,4-éthylènedioxypyrrole), le poly(aniline-*co-*éthyl-4-aminobenzoate), le poly(1-(3-pyridinyl)-2,5-di(2-thiényl)-1H-pyrrole) (poly(PTPy)) et le poly(1-(1,10-phénanthrolinyl)-2,5-di(2-thiényl)-1H-pyrrole) (poly(PhenTPy)).

Parmi ces polymères électrochromes, le poly(3,4-éthylène dioxythiophène (PEDOT) est particulièrement préféré.

L'épaisseur de l'électrode de travail varie généralement de quelques nanomètres à plusieurs microns. A titre d'exemple, l'épaisseur de l'électrode de travail peut varier de 40 nm à 10 µm environ.

Selon une forme de réalisation particulière et préférée de l'invention, le dispositif électrochrome ne comprend qu'une seule électrode de travail électrochrome.

Selon l'invention on entend par électrolyte « solide », un électrolyte se présentant sous la forme d'une couche ou d'une membrane solide.

L'électrolyte solide utilisable dans le dispositif électrochrome conforme à la présente invention peut notamment être choisi parmi :
i) les liquides ioniques gélifiés ou plastifiés par au moins un agent gélifiant ou plastifiant,
ii) les solutions électrolytiques d'au moins un sel d'électrolyte et/ou d'au moins un acide en solution dans un solvant, lesdites solutions étant gélifiées ou plastifiées par au moins un agent gélifiant ou plastifiant, et
iii) les couches minces d'un matériau choisi parmi certains oxydes hydratés tels que par exemple Ta₂O₅ hydraté et ZrO₂ hydraté.

La nature des liquides ioniques utilisables selon l'invention n'est pas critique. Les liquides ioniques sont définis selon Wasserscheid et Welton [Wasserscheid, P. et Welton, T., Ionic Liquids in Synthesis, 2nd edition. Wiley-VCH, Weinheim: 2007] comme étant des sels organiques de point de fusion inférieur au point d'ébullition de l'eau. Ils sont constitués de l'association d'un anion et d'un cation dans des proportions stoechiométriques assurant la neutralité électrique du sel. Les cations les plus utilisés ont une structure du type ammonium, imidazolium, pyridinium, pyrrolidinium, phosphonium, thiazolium, quinolinium, tétraminium. Les anions sont de préférence choisis parmi les halogénures (F, Cl, Br, I) ; les anions tétrafluoroborate (BF₄), hexafluorophosphate (PF₆), sulfate (SO₄), hydrogénosulfate (HSO₄) , les anions carboxylate, par exemple, les formiates (HCOO), acétate (CH₃COO), trifluoroacétate (CF₃COO), propanoate (CH₃-CH₂-COO) ; les anions sulfonylimide, par exemple, les anions bis((trifluorométhyl)sulfonyl)imide ((CF₃-SO₂)₂N), bis(méthylsulfonyl)imide ((CH₃-SO₂)₂N) ; l'anion dicyanamide (N(CN)₂) ; les anions sulfonate tels que par exemple les méthylsulfonate (CH₃SO₃), trifluorométhylsulfonate (CF₃SO₃), benzènesulfonate (C₆H₅-SO₃), p-toluènesulfonate (CH₃-C₆H₄-SO₃), et perfluorobutylsulfonate (C₄F₉SO₃) ; les anions sulfinate tels que, par exemple, les trifluorométhanesulfinate (CF₃SO₂), perfluorobutylsulfinate (C₄F₉SO₂) ; les anions phosphate tels que par exemple les diméthyl phosphate ((CH₃O)₂PO₂), diéthyl phosphate ((C₂H₅O)₂PO₂), dihydrogénophosphate (H₂PO₄), hydrogénophosphate (HPO₄) et phosphate (PO₄); les anions phosphonate tels que, par exemple, les méthylphosphonate (CH₃PO₃H), éthylphosphonate (C₂H₅PO₃H) ; et les autres anions tels que, par exemple, l'hexafluoroarsénate (AsF₆), l'hexafluoroniobiate (NbF₆), et l'hexafluoroantimonate (SbF₆).

Parmi de tels liquides ioniques, on peut plus particulièrement citer le bis-(trifluorométhanesulfonyl)imide de 1-éthyl-3-méthylimidazolium (EMI-TFSI), le bis-(trifluorométhanesulfonyl)imide de 1-butyl-3-méthylimidazolium (BMITFSI), l'hexafluorophosphate de 1-butyl-3-méthylimidazolium (BMIPF₆), et leurs mélanges. Parmi ces liquides ioniques, le BMITFSI est particulièrement préféré en raison de sa large fenêtre électrochimique.

Les sels d'électrolytes utilisables selon l'invention peuvent par exemple être choisis parmi les sels de lithium tels que par exemple le bis(trifluorométhanesulfonyl)imide de lithium (LiTFSI), le perchlorate de lithium (LiClO₄), l'hexafluorophosphate de lithium (LiPF₆), les sels de sodium tels que par exemple le bis(trifluorométhanesulfonyl)imide de sodium (NaTFSI), et certains acides tels que l'acide de bis(trifluorométhanesulfonyl)imide (HTFSI), l'acide phosphorique et l'acide sulfurique.

Le solvant des solutions électrolytiques définies au point iii) ci-dessus peut être choisi parmi les solvants aprotiques polaires tels que par exemple les carbonates cycliques et linéaires (par exemple le carbonate d'éthylène, le carbonate de propylène, le carbonate de butylène, le carbonate de diméthyle, le carbonate de diéthyle, le carbonate de dipropyle, le carbonate d'éthyle-méthyle, le carbonate de vinylène), les éthers cycliques (par exemple le tetrahydrofurane), les éthers de polyéthylène glycols de formule RO(CH₂CH₂O)ₙR' dans lesquels R et R' sont CH₃ ou C₂H₅, et 1 ≤ n ≤ 12, les tétraalkyl sulfamides de formule RR'NSO₂NR"R''' dans lesquels R, R', R" et R''' sont CH₃ ou C₂H₅, la 3-méthyl-1,3-oxazolidine-2-one, et les esters cycliques (par exemple la γ-butyrolactone).

Le solvant des solutions électrolytiques définies au point ii) peut également être un solvant aqueux tel que de l'eau.

Lorsque l'électrolyte solide du dispositif électrochrome conforme à l'invention est un liquide ionique gélifié ou plastifié, celui-ci peut en outre renfermer au moins un sel de lithium. Dans un tel cas, ce sel de lithium est choisi parmi les sels de lithium utilisables à titre de sel d'électrolyte dans les solutions définies au point ii). Ces sels de lithium représentent alors de préférence une concentration inférieure à quelques moles par litre de liquide ionique.

L'électrolyte solide du dispositif électrochrome conforme à l'invention peut en outre renfermer le couple rédox I₃⁻/I⁻. La présence d'un tel couple rédox dans l'électrolyte permet avantageusement d'augmenter les performances électrochromes du dispositif.

Les agents gélifiants utilisables pour solidifier les liquides ioniques ou les solutions d'au moins un sel d'électrolyte et/ou d'au moins un acide peuvent par exemple être choisis parmi la cellulose, la nitrocellulose, les carboxyméthylcelluloses (CMC), etc...

Les agents plastifiants utilisables pour solidifier les liquides ioniques ou les solutions d'au moins un sel d'électrolyte et/ou d'au moins un acide peuvent par exemple être choisis parmi des composés pré-polymérisés ou polymérisant durant l'assemblage du dispositif électrochrome et résultant de la polymérisation d'un ou de plusieurs monomères choisis parmi l'oxyde d'éthylène, l'oxyde de propylène, le méthacrylate de méthyle, l'acrylate de méthyle, l'acrylonitrile, le méthacrylonitrile, et le fluorure de vinylidène, ledit polymère ayant une structure de type linéaire, de type peigne, statistique, alterné ou à bloc, réticulé ou non. Parmi de tels polymères on peut notamment citer le poly(méthyl méthacrylate (PMMA ), le polyoxyde d'éthylène (POE) le poly acrylonitrile (PAN), et leurs mélanges.

La quantité d'agent plastifiant ou/et gélifiant présent au sein du liquide ionique ou au sein de la solution électrolytique dépend de la viscosité initiale du liquide ionique ou de la solution électrolytique, de sa nature, etc....

Lorsque l'électrolyte solide est un liquide ionique plastifié ou gélifié, la quantité d'agent plastifiant ou gélifiant peut varier de 20 à 70 % environ en masse par rapport à la masse du liquide ionique, et encore plus préférentiellement, de 40 à 50 % environ.

Lorsque l'électrolyte solide est une solution électrolytique plastifiée ou gélifiée telle que définie ci-dessus au point ii), la quantité d'agent plastifiant ou gélifiant peut varier de 20 à 80 % en masse par rapport à la masse totale de la solution électrolytique initiale, et encore plus préférentiellement, de 30 à 60 %.

A titre d'exemple, lorsque l'électrolyte solide est du BMITFSI et qu'il renferme en outre un sel de lithium tel que LiTFSI, alors l'ajout de 40 % en masse environ de PMMA est nécessaire et suffisant pour obtenir un électrolyte solide adhérant bien aux électrodes tout en conservant une conductivité ionique suffisante. A titre d'autre exemple, lorsque l'électrolyte solide est du BMITFSI mais qu'il ne renferme pas de sel de lithium, alors la quantité de PMMA nécessaire et suffisante pour obtenir un électrolyte solide ayant les mêmes propriétés mécaniques que celles de l'électrolyte solide BMITFSI-LiTFSI ci-dessus est de 50 % en masse.

L'électrolyte solide présente de préférence une épaisseur variant de quelques nanomètres à plusieurs centaines de micromètres environ, et encore plus préférentiellement de 100 nm à 50 µm.

Comme indiqué précédemment, le matériau métallique de la contre électrode (MC) est choisi parmi les métaux dont le potentiel d'oxydoréduction correspond à la partie haute de la fenêtre de potentiels de fonctionnement dudit dispositif électrochrome, typiquement 1,5 V au maximum. Parmi de tels métaux, on peut notamment citer le cuivre (Cu²⁺/Cu = 0,34 V), le fer (Fe²⁺/Fe = 0,4 V), l'argent (Ag⁺/Ag = 0,8V), le platine (Pt²⁺/Pt = 1,2 V), et l'or (Au³⁺/Au = 1,4 V), l'argent étant particulièrement préféré.

Le matériau métallique conducteur de la contre électrode du dispositif conforme à l'invention peut se présenter sous la forme d'un matériau massif tel que par exemple sous la forme d'une feuille ou d'une grille, ou bien il peut également être utilisé sous la forme d'une couche mince (ayant typiquement une épaisseur inférieure ou égale à 20 µm) ou bien encore sous la forme d'un matériau « discontinu » constitué par exemple de nanofils (percolants entre eux) et disposés sur un substrat.

L'épaisseur de la contre électrode peut varier dans une large mesure. Elle peut varier de quelques nanomètres à plusieurs centimètres.

Selon une première forme de réalisation de l'invention, l'électrode de travail est en contact avec un collecteur de courant, par la face qui est opposée à celle qui est en contact avec l'électrolyte solide. Dans ce cas, le dispositif électrochrome conforme à l'invention comporte 4 couches et comprend un collecteur de courant en contact avec l'électrode de travail (EC1), une contre électrode en matériau métallique (MC) et un électrolyte solide séparant lesdites électrodes.

Selon cette première forme de réalisation, le collecteur de courant est alors de préférence choisi parmi les oxydes conducteurs transparents parmi lesquels on peut par exemple citer l'oxyde d'indium dopé à l'étain In₂O₃:Sn (ITO), l'oxyde d'étain dopé fluor SnO₂:F (FTO), l'oxyde de zinc dopé au gallium ou à l'aluminium (GZO ou AZO) ou bien encore au silicium (ZnO :Si).

Selon une seconde forme de réalisation particulière de l'invention, le matériau électrochrome de l'électrode de travail présente une conductivité électronique suffisante pour que la présence d'un collecteur de courant au contact de l'électrode de travail électrochrome ne soit pas nécessaire et le dispositif électrochrome conforme à l'invention est alors uniquement constitué de seulement 3 couches : une électrode de travail électrochrome (EC1), un électrolyte solide et une contre électrode métallique (MC). Cette conductivité électronique suffisante du matériau électrochrome est observée lorsque les polymères électrochromes sont choisis parmi les polymères présentant en outre des propriétés de conductivité électronique et/ou lorsque le matériau électrochrome comprend en outre un agent générant une conductivité électronique.

Selon l'invention, on entend par « conductivité électronique suffisante », une conductivité supérieure ou égale à quelques dizaines de Siemens par cm.

En d'autres termes, lorsque le dispositif électrochrome conforme à l'invention comporte une électrode de travail comprenant un matériau électrochrome renfermant au moins un polymère électrochrome ayant une conductivité électronique suffisante et/ou au moins un agent générant une conductivité électronique, il est possible de s'affranchir totalement des couches collectrices de courant. Le dispositif électrochrome conforme à l'invention peut alors être composé de seulement 3 couches au lieu des 5 classiquement utilisées, sans tenir compte des substrats éventuellement utilisés de part et d'autre de chacune des électrodes.

Parmi les polymères électrochromes mentionnés précédemment, les polymères présentant une conductivité électronique suffisante peuvent être choisis parmi le poly(3,4-éthylène dioxythiophène) (PEDOT), le poly(3,4-éthylène dioxysélénophène) (ou PEDOS), le poly(3,4-propylène dioxythiophène) (ou PProDOT), le 4,7-bis-(2,3-dihydrothiéno[3,4-b][1,4]dioxin-5-yl)-2-phényl-1H-benzo[d]imidazole (ou BImBEd), le 1,4-bis-(2-(3,4-éthylènedioxy)thiényl)benzène (ou BEDOT-B), les copolymères à base de pyrrole et de 3,4-éthylènedioxythiophène (ou EDOT) tels que le poly(2,2'-di-pyrrol-1-yl-[4,4']bithiazolyl-*co*-EDOT (ou PyDBTH-*co*-EDOT), les copolymères de 4-aminodiphénylamine et de 4,4'-diaminodiphénylsulfone (ou DAPsone), l'acide poly[2,5-di(2-thiényl)-1H-pyrrole-1-(p benzoïque)] (ou poly-DPB), les polymères de la famille des alkylcarbazoles tels que les poly(9H-N-alkylcarbazoles) (ou poly(9-NAC), les poly(3,6-dinitro-9H-N-alkylcarbazoles) (ou poly(3,6-DN-9-NAC)), les poly(3,6-diamino-9H-N-alkylcarbazoles) (ou poly(3,6-DA-9-NAC)) dans lesquels les radicaux alkyle sont par exemple un radical méthyle.

Parmi ces polymères, le poly(3,4-éthylène dioxythiophène (PEDOT) est particulièrement préféré.

L'agent générant une conductivité électronique utilisable dans le matériau électrochrome de l'électrode de travail conforme à l'invention peut notamment être choisi parmi les polymères conducteurs différents des polymères électrochromes ayant une conductivité électronique mentionnés précédemment, les oxydes semi-conducteurs dopés tels que par exemple ZnO:Si ou ZnO:Al.

Parmi de tels polymères conducteurs on peut notamment citer le poly(styrène sulfonate), le 1,1'-binaphtyl substitué tel que par exemple le poly(6,6'-Bis(2,2'-bithionophen-5-yl)-1,1'-bi-2,2'-naphtol), le poly(1-hydroxy-2-méthyloxybenzène) (ou PHMOB), le poly(2,2'-di-pyrrol-1-yl-[4,4']bithiazolyl) (ou PyDBTH), les polyanilines, les polypyrroles, les polycarbazoles, les polyindoles, les polyazépines, les polyfluorènes, les polypyrènes, les polyazulènes, les polynaphtalènes et les polythiophènes. A cette occasion, l'homme du métier veillera à ce que l'utilisation de ces polymères ne soit pas incompatible avec les propriétés intrinsèques du dispositif électrochrome conforme à l'invention, en particulier à ce que l'utilisation de ces polymères n'altère pas les propriétés d'électrochromisme de l'électrode de travail.

Lorsqu'ils sont utilisés, les polymères conducteurs représentent de préférence de 2 à 75 % des monomères par rapport aux monomères électrochromes, et encore plus préférentiellement de 5 à 30 %.

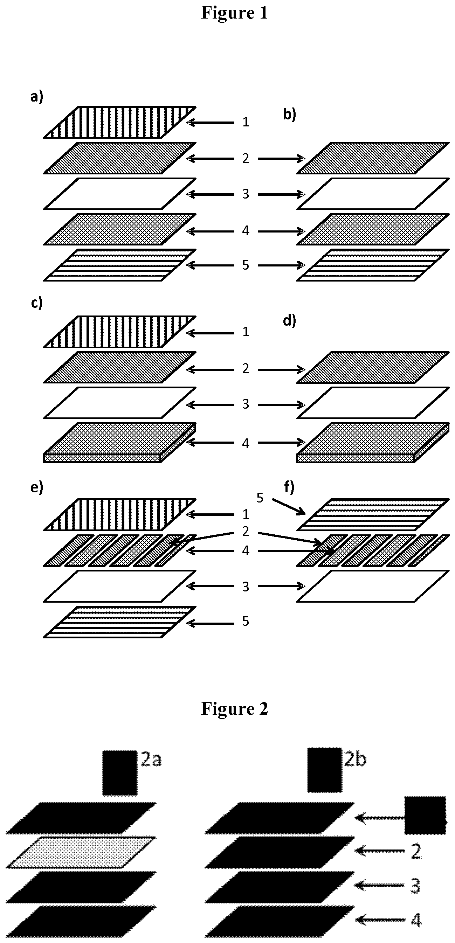

Selon cette seconde forme de réalisation, différentes configurations du dispositif électrochrome sont possibles. Ces différentes configurations sont schématisées sur la figure 1 annexée.

Selon une première configuration (voir figure 1a), le dispositif électrochrome comprend un substrat (1) du côté électrode de travail (Substrat 1), une électrode de travail en un matériau électrochrome ayant également une conductivité électronique (2) (EC1), un électrolyte solide (3) (I), une contre électrode (4) en un matériau métallique (MC) et un substrat (5) pour la contre électrode (4) (Substrat 2) (voir figure 1a). Selon cette première configuration, et lorsque la couche conductrice électrochrome est auto-supportée, il n'est pas nécessaire d'utiliser de substrat (1) (voir figure 1b). Par ailleurs, dans les dispositifs représentés sur les figures 1a et 1b, le substrat (5) de la contre électrode (4) peut en outre être facultatif lorsque la contre électrode (4) présente une épaisseur suffisante de façon à lui conférer une rigidité suffisante, cette épaisseur étant généralement de l'ordre de 100 µm à quelques cm environ (figures 1c et 1d)).

Selon une seconde configuration (voir figures 1e et 1f), l'électrode de travail (2) et la contre électrode métallique (4) sont disposées côte à côte sans être en contact, dans un même plan, et sont en contact avec le substrat (1) et l'électrolyte solide (3), l'électrolyte solide (3) étant lui-même supporté ou non par un substrat (5).

Le substrat (5) de la contre électrode est un matériau opaque, translucide ou transparent pouvant par exemple être choisi parmi les papiers, les plastiques, les matières textiles, les verres, les métaux, les céramiques, le bois, etc. Le substrat (1) éventuellement en contact avec l'électrode de travail électrochrome peut être choisi parmi les matériaux translucides (tel que le papier calque par exemple) et de préférence transparents (tels que le verre, le PET, etc).

Les différentes parties du dispositif électrochrome conforme à l'invention peuvent être préparées et assemblées par l'ensemble des techniques de réalisation de couches minces existantes et bien connues de l'homme du métier telles que par exemple par enduction au rouleau (« *roll coating* » ou « *Roll to Roll »*)*,* flexographie, sérigraphie, pulvérisation cathodique, trempage-retrait (« dip coating »), enduction à la tournette (« *spin coating* »), application au couteau à pelliculer (« *doctor blade* »), etc... ou un mélange de ces techniques. Les systèmes assemblés peuvent être monolithiques, laminés en structure ouverte ou fermée.

Enfin l'invention a également pour objet les différentes applications et utilisations du dispositif électrochrome tel que décrit précédemment.

En particulier, le dispositif électrochrome conforme à l'invention peut avantageusement être utilisé pour :
- l'affichage de données (écrans de textes et/ou images, système de pixellisation possible, la réalisation de témoins visuels (On/Off, risques (par ex : danger électrique)), authentification de produits contrefaits, etc...),
- la fabrication de rétroviseurs automobiles et de visières, en particulier de visières de casques de moto. Dans ces deux cas, le dispositif électrochrome conforme à l'invention permet d'éviter l'éblouissement lié aux phares des autres véhicules et du soleil respectivement),
- la fabrication de vitrages de bâtiments (en particulier afin de limiter l'intrusion ou l'évacuation de la chaleur des pièces *via* le vitrage durant l'été ou l'hiver respectivement), la furtivité thermique (camouflage optique dans l'infrarouge), en effet certains matériaux électrochromes tels que le PEDOT peuvent moduler leurs absorptions dans l'infrarouge.

La présente invention est illustrée par les exemples ci-après, auxquels elle n'est cependant pas limitée.

### EXEMPLE 1

### Préparation et propriétés d'un dispositif électrochrome à quatre couches utilisant un liquide ionique plastifié comme électrolyte solide

### Préparation du dispositif

Dans cet exemple, on a préparé un dispositif électrochrome à quatre couches à structure sandwich, constitué de la chaine électrochimique suivante :
- Support transparent en polyéthylène téréphtalate (PET) ;
- Collecteur de courant : oxyde d'indium dopé à l'étain (ITO) ;
- Electrode de travail électrochrome : poly(3,4-éthylènedioxy)thiophène (PEDOT) ;
- Electrolyte solide : l'électrolyte a été préparé en utilisant du 1-butyl-3-méthylimidazolium bis(trifluorométhylsulfonyl) imide (BMITFSI) et 50% en masse de PMMA à titre d'agent plastifiant ;
- Contre électrode/Collecteur de courant : couche d'encre à l'argent métallique (épaisseur = 5-10 µm)
- Support de la contre électrode : papier

Ce dispositif a été réalisé à l'aide de film de PEDOT déposé industriellement par la méthode *« Roll to Roll»* sur un substrat de PET recouvert d'ITO par polymérisation *in-situ.* L'encre à l'argent métallique a été déposée par flexographie sur le substrat papier. La membrane d'électrolyte solide a été obtenue en mélangeant du BMITFSI (société Solvionic) avec 50% massique de PMMA en utilisant de la butan-2-one comme solvant commun. Le liquide ionique est à ce moment liquide. L'électrolyte ionique à l'état liquide a été déposé sur le substrat de papier recouvert de la couche d'encre à l'argent par application au couteau à pelliculer (« *doctor blade* »). L'ensemble a ensuite été chauffé à une température d'environ 100°C pour éliminer une partie de la butan-2-one afin que l'électrolyte forme une membrane qui ne soit pas totalement sèche. À ce moment, le substrat de PEDOT/ITO/PET a été appliqué à la surface et le séchage à l'étuve à une température d'environ 110°C a été complété pour éliminer le reste du solvant.

Ce dispositif électrochrome est représenté schématiquement par la figure 2 annexée sur laquelle on peut voir le dispositif à l'état décoloré (figure 2a) et à l'état coloré (figure 2b). Il est constitué d'un collecteur de courant (6) en contact avec l'électrode de travail électrochrome (2), qui est séparé de la contre-électrode (4) par une couche d'électrolyte solide (3). Le support PET du collecteur de courant et le support papier de la contre électrode ne sont pas représentés sur cette figure.

### Stabilité en chronoampérométrie cyclique

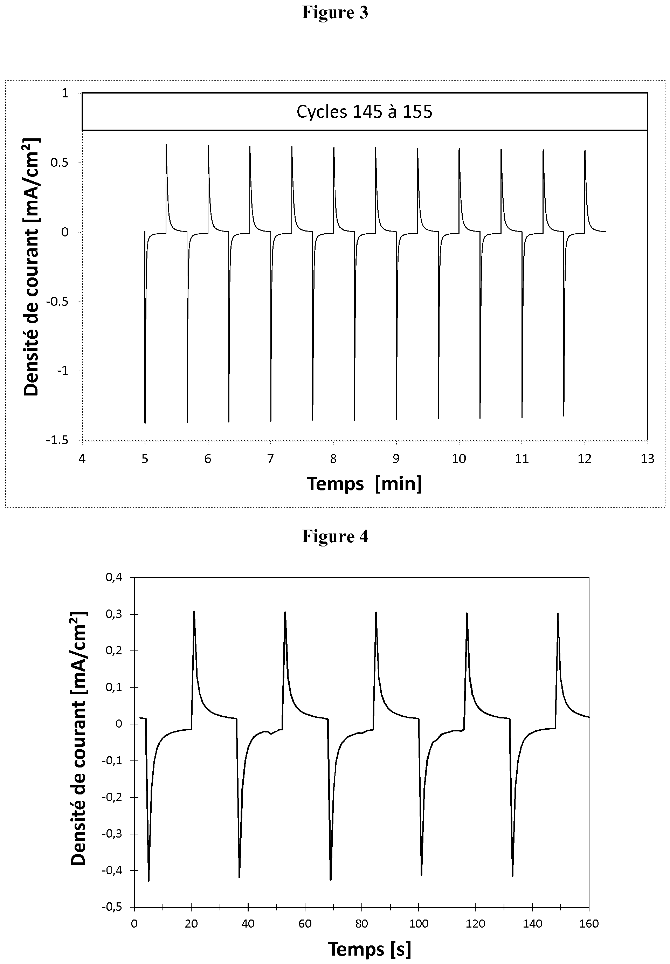

La stabilité électrochimique de ce dispositif électrochrome, étudiée par cyclage chronoampérométrique, a été évaluée dans un premier temps en milieu liquide en montage 3 électrodes usuel en électrochimie (i.e. films plongés dans l'électrolyte (BMITFSI sans ajout de PMMA). La Figure 3 annexée rapporte les résultats de cyclage du 145^{ème} au 155^{ème} cycle, la densité de courant (en mA/cm²) étant fonction du temps (en minutes)) avec une électrode de platine dans le domaine de potentiel 0,7 à -0,7 V vs une électrode de référence Hg/HgO). Les résultats reportés sur la figure 3 annexée montrent la bonne cyclabilité de ce matériau électrochrome après une période de formatage de moins d'une centaine de cycle. Ce montage prouve la stabilité électrochimique du matériau électrochrome vis-à-vis de l'électrolyte. La durée de commutation à 90% du PEDOT est de 2s en coloration et de 4,5s en décoloration dans ces conditions (±0,7V vs Pt, réf Hg/HgO) et la capacité surfacique obtenue est de 1,4 mC/cm².

Le dispositif électrochrome de la figure 2 a ensuite été testé en système « solide », dans le domaine de potentiel 0 à -0,7 V. La figure 4 annexée montre un extrait des courbes de chronoampérométrie du dispositif électrochrome ainsi obtenues, la densité de courant (en mA/cm²) étant fonction du temps (en secondes). Cet extrait permet de montrer la forte vitesse de commutation du système. La commutation à 90% du système s'opère en moins de 2,5 secondes, ce qui est aussi rapide qu'en montage avec un électrolyte liquide. De plus, la capacité surfacique du dispositif électrochrome conforme à l'invention n'est que de 0,5 mC/cm². Il apparait donc qu'une couche électrochrome (EC2) et un collecteur de courant (TCO) peuvent avantageusement être substitués par une couche unique de matériau métallique conducteur (MC) jouant à la fois le rôle de contre électrode et de collecteur. Par ailleurs, cette courbe de chronoampérométrie cyclique associée à l'activation du dispositif électrochrome conforme à l'invention met en évidence le nouveau processus électrochimique présenté précédemment et lié à l'oxydation réversible du MC, car l'électrolyte (BMITFSI) est stable dans cette fenêtre de potentiel (-0.7 à 0V) et hydrophobe (i.e. la décomposition de l'eau ne peut pas intervenir dans le processus électrochrome). De plus dans ce cas, l'utilisation de la couche en argent (MC) et de cet électrolyte solide rend le dispositif électrochrome ultra rapide.

### EXEMPLE 2

### Préparation d'un dispositif électrochrome à 3 couches utilisant un électrolyte solide à base d'un liquide ionique plastifié

### Préparation du dispositif

Dans cet exemple, on montre que l'utilisation d'un matériau électrochrome conducteur comprenant un polymère électrochrome ayant une conductivité électronique tel que par exemple le PEDOT et en outre un polymère conducteur tel que le poly(styrène sulfonate) (PSS) permet de réduire l'ensemble collecteur de courant/électrode de travail à une seule et même couche. On a donc préparé un dispositif électrochrome à trois couches à structure sandwich verticale constitué de la chaine électrochimique suivante :
- Support transparent en polyéthylène téréphtalate (PET) ;
- Electrode de travail/Collecteur de courant : monocouche de matériau électrochrome conducteur : PEDOT:PSS vendu sous la forme d'une encre commerciale de référence Orgacon ICP 1050 (Agfa) déposée sur un substrat de PET;
- Electrolyte solide : l'électrolyte a été préparé en utilisant du 1-butyl-3-méthylimidazolium bis(trifluorométhylsulfonyl) imide (BMITFSI) et 50% massique de PMMA à titre d'agent plastifiant ;
- Contre électrode/Collecteur de courant : couche d'encre à l'argent métallique (épaisseur = 5-10 µm).
- Support de la contre électrode : papier

Ce dispositif a été réalisé à l'aide de film de PEDOT :PSS déposé industriellement par la méthode « *Roll to Roll»* sur un substrat de PET seul par copolymérisation *in-situ.* L'encre à l'argent métallique a été déposée par flexographie sur le substrat papier. La membrane d'électrolyte solide a été obtenue en mélangeant du BMITFSI (société Solvionic) avec 50% massique de PMMA en utilisant de la butan-2-one comme solvant commun. Le liquide ionique est à ce moment liquide. L'électrolyte ionique à l'état liquide a été déposé sur le substrat de papier recouvert de la couche d'encre à l'argent par application au couteau à pelliculer (« *doctor blade* »). L'ensemble a ensuite été chauffé à une température d'environ 100°C pour éliminer une partie de la butan-2-one afin que l'électrolyte forme une membrane qui ne soit pas totalement sèche. À ce moment, le substrat de PEDOT/ITO/PET a été appliqué à la surface et le séchage à l'étuve à une température d'environ 110°C a été complété pour éliminer le reste du solvant.

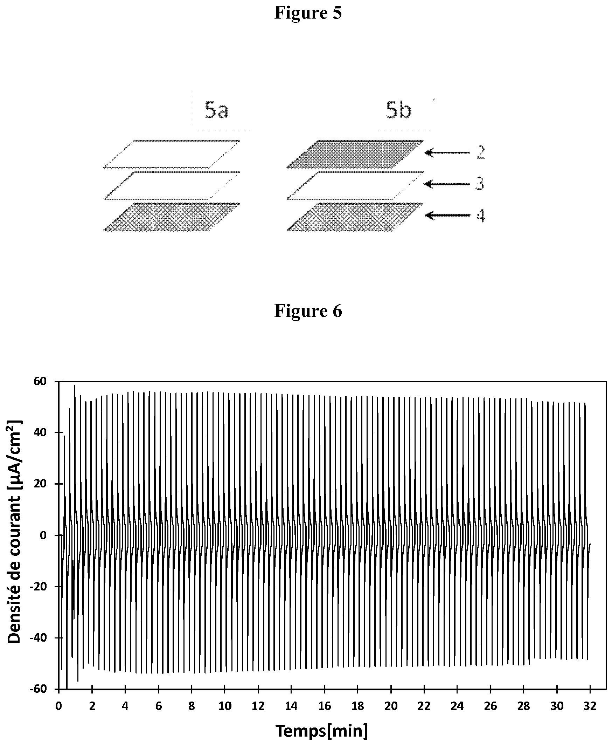

Ce dispositif électrochrome est représenté schématiquement par la figure 5 annexée sur laquelle on peut voir le dispositif à l'état décoloré (figure 5a) et à l'état coloré (figure 5b). Il est constitué d'une électrode de travail électrochrome (2), qui est séparée de la contre-électrode (4) par une couche d'électrolyte solide (3). Le support PET du matériau électrochrome conducteur et le support papier de la contre électrode ne sont pas représentés sur cette figure.

La stabilité électrochimique de ce dispositif électrochrome, étudiée par cyclage chronoampérométrique, a été évaluée directement en configuration « solide ».

La figure 6 annexée montre les courbes de chronoampérométrie obtenues, la densité de courant (en µA/cm²) étant fonction du temps (en minutes).

Une fois de plus, cette figure illustre la bonne cyclabilité de ce dispositif électrochrome, avec une très faible perte de capacité au cours du cyclage, ce qui traduit une bonne stabilité de ce système dans les conditions utilisées (-0,7 à 0V pour la coloration et décoloration respectivement). L'utilisation d'un matériau qui soit à la fois conducteur électronique et électrochrome à l'électrode de travail, permet de s'affranchir totalement des couches spécifiquement dédiées à la fonction de « collecteur de courant ». Ceci autorise, dans le cas d'une industrialisation de l'invention, de diminuer fortement le coût de production d'un système électrochrome car l'utilisation d'un substrat revêtu par une couche d'oxyde transparent conducteur réalisée principalement par dépôt physique (PVD) ou dépôt chimique en phase vapeur (CVD) n'est alors plus requise.

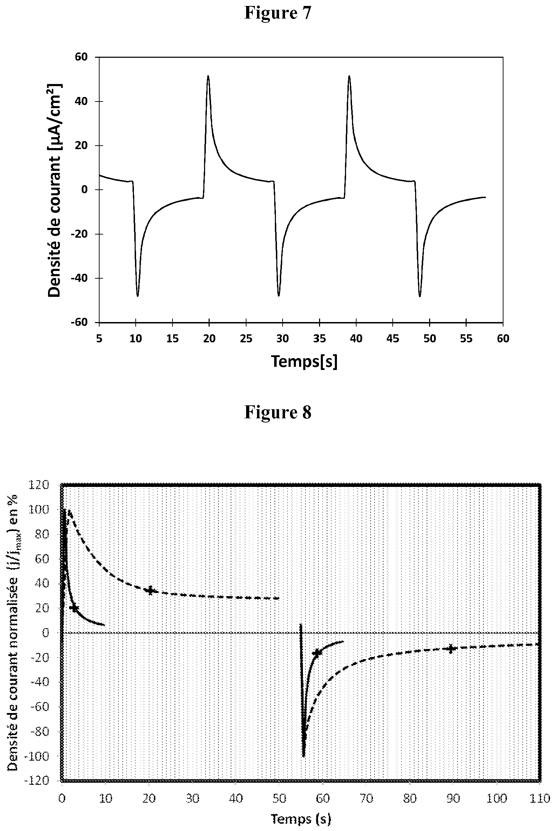

Un agrandissement de la courbe de chronoampérométrie cyclique de la figure 6 est présenté à la figure 7 annexée. Cet agrandissement permet d'apprécier la vitesse de commutation de ce système. 90% de la commutation du système est obtenu en 3,5s ; de plus sa consommation électrique est très faible (0,3mC/cm²).

Les performances de ce dispositif conforme à l'invention ont été comparées à un dispositif électrochrome classique à 5 couches basé sur l'association des matériaux électrochromes WO₃ et LiNiO et dont la préparation et les propriétés sont décrites dans l'article de H. Moulki et al., Electrochimica Act., 2012, 74, 46-52. Ce dispositif à 5 couches selon l'art antérieur était constitué de la chaine électrochimique suivante :
- Collecteur de courant : ITO
- Electrode de travail électrochrome : PEDOT
- Electrolyte : 0,3M de LiTFSI dissous dans du BMITFSI et plastifié à l'aide de 40% massique de PMMA
- Contre électrode : Li-Ni-O
- Collecteur de courant : ITO,
chacun des collecteurs de courant étant par ailleurs supporté par un substrat en PET.

Les résultats sont rapportés sur la figure 8 annexée sur laquelle le rapport densité de courant / densité de courant maximale (J/Jmax en %) est fonction du temps (en s). Sur cette figure, les courbes du dispositif électrochrome à 5 couches selon l'art antérieur sont représentées en trait pointillé et les courbes du dispositif électrochrome à 3 couches selon la présente invention sont représentées en trait continu, la croix figurant sur les courbes marquant le point à 90 % de la coloration ou de la décoloration.

Concernant le dispositif électrochrome à 5 couches selon l'art antérieur, on a noté une durée de décoloration de 20,4 s et une durée de coloration de 35,4 s.

Comparativement, pour le dispositif électrochrome à 3 couches selon la présente invention, on a noté une durée de décoloration de 3 s et une durée de coloration de 3,5 s.

Il apparait que le dispositif électrochrome à trois couches conforme à la présente invention a un temps de commutation à 90% plus court qu'un système à 5 couches classique.

### Exemple 3

### Préparation d'un dispositif électrochrome à 3 couches à structure ouverte

### Préparation du dispositif

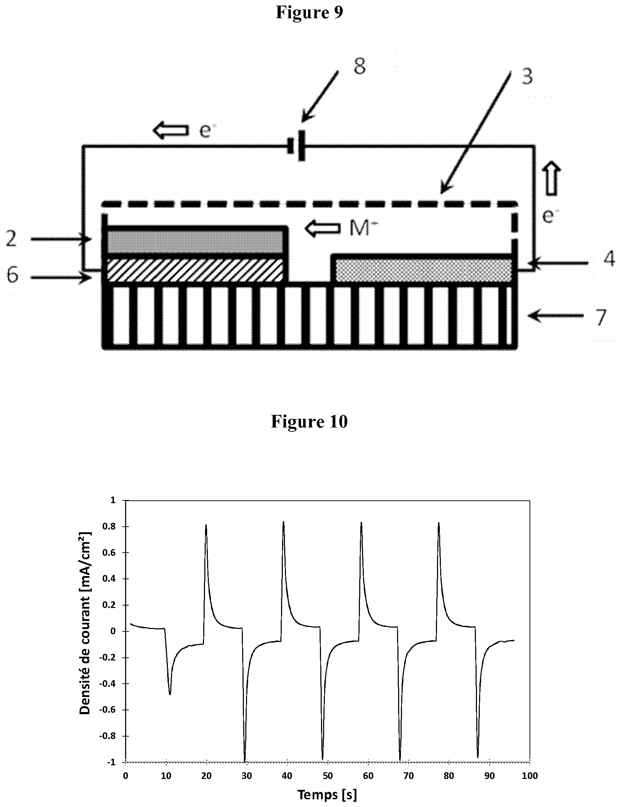

Dans cet exemple, on a préparé un dispositif électrochrome à structure ouverte et tel que représenté sur la figure 9 annexée. Ce dispositif est constitué d'un support en papier (7) sur lequel repose, d'une part, un collecteur de courant (6) en argent, et d'autre part, une contre électrode (4) en argent, ledit collecteur (6) étant surmonté d'une électrode de travail (2) en matériau électrochrome (dans cet exemple un mélange PEDOT:PSS vendu sous la forme d'une encre commerciale de référence Orgacon ICP 1050 (Agfa)), lesdites électrodes (2, 4) sont séparées l'une de l'autre d'une distance de quelques micromètres et englobées par un électrolyte solide (3) constitué d'un mélange de BMITFSI et de 50 % en masse de PMMA à titre d'agent plastifiant, le collecteur de courant (6) et la contre électrode (4) étant reliées aux bornes d'une alimentation électrique externe au dispositif (8).

L'encre à l'argent a été déposée par flexographie sur le substrat papier en utilisant un motif afin d'éviter les court-circuits entre les deux électrodes. Le PEDOT :PSS a été déposé par application au couteau à pelliculer (« *doctor blade »*). Un masque a été utilisé afin de ne recouvrir qu'une seule des deux électrodes en argent. La membrane d'électrolyte solide a été obtenue en mélangeant du BMITFSI (Solvionic) avec 50% massique de PMMA en utilisant de la butan-2-one comme solvant commun. Le liquide ionique est à ce moment liquide. L'électrolyte ionique à l'état liquide a été déposé sur l'ensemble par application au couteau à pelliculer (« *doctor blade* »). Le tout a été séché à l'étuve à 110°C pour solidifier l'électrolyte.

La variation du courant électrique en fonction des deux tensions appliquées (-0,7 V à l'état sous tension afin de colorer le dispositif et 0 V pour le décolorer) a ensuite été mesurée et est rapportée sous forme de chronoampérométrie cyclique sur la figure 10 annexée sur laquelle la densité de courant (en mA/cm²) est fonction du temps (en min.).

Ces résultats montrent que le dispositif fonctionne à une très faible tension (0,7V) comparativement aux systèmes électrochromes classiques qui fonctionnent à une tension plus élevée (environ 1,5 V, la différence est en fait plus importante puisqu'il faut appliquer 1,5 V en coloration et -1,5 V en décoloration, ce qui fait un delta de 3 V alors que le dispositif électrochrome conforme à l'invention fonctionne entre 0,7V et 0V) pour une consommation électrique de l'ordre de 1 mA. Ce changement de configuration du dispositif électrochrome par rapport à celui de l'exemple 1 (les couches du collecteur de courant, du matériau électrochrome formant l'électrode de travail et de la contre électrode métallique ne sont plus superposées, mais juxtaposées dans un même plan, sans être en contact puisqu'elles sont englobées par l'électrolyte solide) permet une modification de l'assemblage/impression du système sans modifier fortement ses propriétés de cyclage. La capacité surfacique reste toujours faible 1,3 mC/cm² et la vitesse de commutation est toujours rapide : le temps de commutation à 90% est de 4s.

## Revendications

1. Dispositif électrochrome comprenant au moins une électrode de travail électrochrome (2), une contre électrode (4), un électrolyte solide (3) et éventuellement au plus un collecteur de courant (6), ledit dispositif comprenant en outre des moyens permettant d'appliquer une tension électrique auxdites électrodes, dispositif dans lequel :
- l'électrode de travail comprend un matériau électrochrome renfermant au moins un polymère électrochrome et, lorsque le collecteur de courant est présent, ladite électrode de travail est en contact avec ledit collecteur de courant,
- l'électrolyte solide est en contact avec chacune desdites électrodes, ledit dispositif électrochrome étant **caractérisé en ce que**:
- la contre électrode est un matériau métallique conducteur (MC) dont le potentiel d'oxydoréduction correspond au potentiel haut de la fenêtre de potentiels de fonctionnement dudit dispositif électrochrome.

2. Dispositif selon la revendication 1, **caractérisé en ce que** les polymères électrochromes de l'électrode de travail sont choisis parmi le poly(3,4-éthylène dioxythiophène), le poly(3,4-éthylène dioxysélénophène), le poly(3,4-propylène dioxythiophène), le 4,7-bis-(2,3-dihydrothiéno[3,4-b][1,4]dioxin-5-yl)-2-phényl-1H-benzo[d]imidazole, le 1,4-bis-(2-(3,4-éthylènedioxy)thiényl)benzène, les copolymères à base de pyrrole et de 3,4-éthylènedioxythiophène, les copolymères de 4-aminodiphénylamine et de 4,4'-diaminodiphénylsulfone, l'acide poly[2,5-di(2-thiényl)-1H-pyrrole-1-(p benzoïque)], les poly(9H-N-alkylcarbazoles), poly(3,6-dinitro-9H-N-alkylcarbazoles) et poly(3,6-diamino-9H-N-alkylcarbazoles) ; les copolymères de tris-[4-(2-thiényl)phényl]amine et de 2,2'-bithiophène, la poly(tris(4-sélèn-2-yl)phénylamine, la poly(2,3,5,6-tetrafluoroaniline), le poly(3,4-éthylènedioxypyrrole), le poly(aniline-*co*-éthyl-4-aminobenzoate), le poly(1-(3-pyridinyl)-2,5-di(2-thiényl)-1H-pyrrole) et le poly(1-(1,10-phénanthrolinyl)-2,5-di(2-thiényl)-1H-pyrrole).

3. Dispositif selon la revendication 1 ou 2, **caractérisé en ce que** l'électrolyte solide est choisi parmi :
i) les liquides ioniques gélifiés ou plastifiés par au moins un agent gélifiant ou plastifiant,
ii) les solutions électrolytiques d'au moins un sel d'électrolyte et/ou d'au moins un acide en solution dans un solvant, lesdites solutions étant gélifiées ou plastifiées par au moins un agent gélifiant ou plastifiant, et
iii) les couches minces d'un matériau choisi parmi certains oxydes hydratés tels que par exemple Ta₂O₅ hydraté et ZrO₂ hydraté.

4. Dispositif selon la revendication 3, **caractérisé en ce que** les liquides ioniques sont choisis parmi le bis-(trifluorométhanesulfonyl)imide de 1-éthyl-3-méthylimidazolium, le bis-(trifluorométhanesulfonyl)imide de 1-butyl-3-méthylimidazolium, l'hexafluorophosphate de 1-butyl-3-méthylimidazolium, et leurs mélanges.

5. Dispositif selon la revendication 3, **caractérisé en ce que** les sels d'électrolytes sont choisis parmi les sels de lithium, les sels de sodium, l'acide phosphorique et l'acide sulfurique.

6. Dispositif selon la revendication 3, **caractérisé en ce que** le solvant des solutions électrolytiques est un solvant aprotique polaire choisi parmi les carbonates cycliques et linéaires, les éthers cycliques, les éthers de polyéthylène glycols de formule RO(CH₂CH₂O)ₙR' dans lesquels R et R' sont CH₃ ou C₂H₅, et 1 ≤ n ≤ 12, les tétraalkyl sulfamides de formule RR'NSO₂NR"R''' dans lesquels R, R', R" et R''' sont CH₃ ou C₂H₅, la 3-méthyl-1,3-oxazolidine-2-one et les esters cycliques ou un solvant aqueux.

7. Dispositif selon la revendication 3, **caractérisé en ce que** l'électrolyte solide est un liquide ionique gélifié ou plastifié, et qu'il renferme en outre au moins un sel de lithium.

8. Dispositif selon l'une quelconque des revendications 3 à 7, **caractérisé en ce que** l'électrolyte solide renferme en outre le couple rédox I₃⁻/I⁻.

9. Dispositif selon l'une quelconque des revendications précédentes, **caractérisé en ce que** l'électrolyte solide présente une épaisseur de 100 nm à 50 µm.

10. Dispositif selon l'une quelconque des revendications précédentes, **caractérisé en ce que** le matériau métallique de la contre électrode est choisi parmi le cuivre, le fer, l'argent, le platine et l'or.

11. Dispositif selon l'une quelconque des revendications précédentes, **caractérisé en ce que** le matériau métallique de la contre électrode se présente sous la forme d'un matériau massif, d'une couche mince ou bien encore sous la forme d'un matériau discontinu constitué de nanofils disposés sur un substrat.

12. Dispositif selon l'une quelconque des revendications précédentes, **caractérisé en ce qu'**il comprend ledit collecteur de courant en contact avec l'électrode de travail et **en ce que** ledit collecteur de courant est choisi parmi les oxydes conducteurs transparents.

13. Dispositif selon la revendication 12, **caractérisé en ce que** les oxydes conducteurs transparents sont choisis parmi l'oxyde d'indium dopé à l'étain In₂O₃:Sn, l'oxyde d'étain dopé fluor SnO₂:F, et l'oxyde de zinc dopé au gallium, à l'aluminium ou au silicium.

14. Dispositif selon l'une quelconque des revendications 1 à 11, **caractérisé en ce que** le matériau électrochrome de l'électrode de travail comprend au moins un polymère électrochrome présentant en outre des propriétés de conductivité électronique et/ou au moins un agent générant une conductivité électronique et **en ce que** la présence dudit collecteur de courant au contact de l'électrode de travail électrochrome n'est pas nécessaire.

15. Dispositif selon la revendication 14, **caractérisé en ce que** les polymères électrochromes présentant en outre des propriétés de conductivité électronique sont choisis parmi le poly(3,4-éthylène dioxythiophène), le poly(3,4-éthylène dioxysélénophène), le poly(3,4-propylène dioxythiophène), le 4,7-bis-(2,3-dihydrothiéno[3,4-b][1,4]dioxin-5-yl)-2-phényl-1H-benzo[d]imidazole, le 1,4-bis-(2-(3,4-éthylènedioxy)thiényl)benzène, **les copolymères à base de pyrrole et de** 3,4-éthylènedioxythiophène, les copolymères de 4-aminodiphénylamine et de 4,4'-diaminodiphénylsulfone, l'acide poly[2,5-di(2-thiényl)-1H-pyrrole-1-(p benzoïque)], les poly(9H-N-alkylcarbazoles), poly(3,6-dinitro-9H-N-alkylcarbazoles) et poly(3,6-diamino-9H-N-alkylcarbazoles).

16. Dispositif selon la revendication 14 ou 15, **caractérisé en ce que** l'agent générant une conductivité électronique est choisi parmi les polymères conducteurs différents des polymères électrochromes ayant une conductivité électroniques tels que définis à la revendication 15, et les oxydes semi-conducteurs dopés.

17. Dispositif selon la revendication 15 ou 16, **caractérisé en ce que** l'électrode de travail et la contre électrode sont disposées côte à côte sans être en contact, dans un même plan et sont en contact avec le substrat et l'électrolyte solide, l'électrolyte solide étant lui-même supporté ou non par un substrat.

18. Dispositif selon la revendication 17, **caractérisé en ce que** le substrat de la contre électrode est un matériau opaque, translucide ou transparent choisi parmi les papiers, les plastiques, les matières textiles, les verres, les métaux, les céramiques, et le bois.

19. Utilisation d'un dispositif électrochrome tel que défini à l'une quelconque des revendications précédentes, pour l'affichage de données, la fabrication de rétroviseurs automobiles et de visières, la fabrication de vitrages de bâtiments ou le camouflage optique dans l'infrarouge.

## Patentansprüche

1. Elektrochrome Vorrichtung, umfassend mindestens eine elektrochrome Arbeitselektrode (2), eine Gegenelektrode (4), einen festen Elektrolyten (3) und eventuell höchstens einen Stromsammler (6), wobei die Vorrichtung ferner Mittel umfasst, die erlauben, eine elektrische Spannung an den Elektroden anzulegen, Vorrichtung, wobei:
- die Arbeitselektrode ein elektrochromes Material umfasst, das mindestens ein elektrochromes Polymer einschließt, und, wenn der Stromsammler vorhanden ist, die Arbeitselektrode mit dem Stromsammler im Kontakt ist,
- der feste Elektrolyt mit jeder der Elektroden im Kontakt ist, wobei die elektrochrome Vorrichtung **dadurch gekennzeichnet ist, dass**:
- die Gegenelektrode ein leitendes metallisches Material (MC) ist, dessen Oxidations-Reduktionspotential dem hohen Potential des Funktionspotentialfensters der elektrochromen Vorrichtung entspricht.

2. Vorrichtung nach Anspruch 1, **dadurch gekennzeichnet, dass** die elektrochromen Polymere der Arbeitselektrode aus dem Poly(3,4-ethylendioxythiophen), dem Poly(3,4-ethylendioxyselenophen), dem Poly(3,4-propylendioxythiophen), dem 4,7-bis-(2,3-dihydrothien[3,4-b][1,4]dioxin-5-yl)-2-phenyl-1H-benzo[d]imidazol, dem 1,4-bis-(2-(3,4-Ethylendioxy)thienyl)benzen, den Copolymeren auf der Basis von Pyrrol und von 3,4-Ethylendioxythiophen, den Copolymeren von 4-Aminodiphenylamin und von 4,4'-Diaminodiphenylsulfon, der Poly[2,5-di(2-thienyl)-1H-pyrrol-1-(p Benzoesäure)], den Poly(9H-N-alkylcarbazolen), Poly(3,6-dinitro-9H-N-alkylcarbazolen) und Poly(3,6-diamin-9H-N-alkylcarbazolen); den Copolymeren von Tris-[4-(2-thienyl)phenyl]amin und von 2,2'-Bithiophen, dem Poly(tris(4-selen-2-yl)phenylamin, dem Poly(2,3,5,6-tetrafluoranilin), dem Poly(3,4-ethylendioxypyrrol), dem Poly(anilin-co-ethyl-4-aminobenzoat), dem Poly(1-(3-pyridinyl)-2,5-di(2-thienyl)-1H-pyrrol) und dem Poly(1-(1,10-phenanthrolinyl)-2,5-di(2-thienyl)-1H-pyrrol) ausgewählt sind.

3. Vorrichtung nach Anspruch 1 oder 2, **dadurch gekennzeichnet, dass** der feste Elektrolyt ausgewählt ist aus:
i) den durch mindestens ein gelierendes oder plastifizierendes Mittel gelierten oder plastifizierten ionischen Flüssigkeiten,
ii) den Elektrolytlösungen mindestens eines Elektrolytsalzes und/oder mindestens einer Säure in Lösung in einem Lösungsmittel, wobei die Lösungen durch mindestens ein gelierendes oder plastifizierendes Mittel geliert oder plastifiziert sind, und
iii) den Dünnschichten eines Materials, ausgewählt aus einigen wasserhaltigen Oxiden wie beispielsweise dem wasserhaltigen Ta₂O₅ und dem wasserhaltigen ZrO₂.

4. Vorrichtung nach Anspruch 3, **dadurch gekennzeichnet, dass** die ionischen Flüssigkeiten aus dem bis-(Trifluormethansulfonyl)imid von 1-Ethyl-3-methylimidazolium, dem bis-(Trifluormethansulfonyl)imid von 1-Butyl-3-methylimidazolium, dem Hexafluorphosphat von 1-Butyl-3-methylimidazolium und ihren Gemischen ausgewählt sind.

5. Vorrichtung nach Anspruch 3, **dadurch gekennzeichnet, dass** die Elektrolytsalze aus dem Lithiumsalzen, den Natriumsalzen, der Phosphorsäure und der Schwefelsäure ausgewählt sind.

6. Vorrichtung nach Anspruch 3, **dadurch gekennzeichnet, dass** das Lösungsmittel der Elektrolytlösungen ein polares aprotisches Lösungsmittel ist, das aus den cyclischen und linearen Carbonaten, den cyclischen Ethern, den Ethern von Polyethylenglykolen der Formel RO(CH₂CH₂O)ₙR', wobei R und R' CH₃ oder C₂H₅ sind und 1 ≤ n ≤ 12, den Tetraalkylsulfamiden der Formel RR'NSO₂NR"R''', wobei R, R, R" und R''' CH₃ oder C₂H₅ sind, dem 3-Methyl-1,3-oxazolidin-2-one und den cyclischen Estern oder einem wässrigen Lösungsmittel ausgewählt sind.

7. Vorrichtung nach Anspruch 3, **dadurch gekennzeichnet, dass** der feste Elektrolyt eine gelierte oder plastifizierte ionische Flüssigkeit ist und dass er ferner mindestens ein Lithiumsalz einschließt.

8. Vorrichtung nach einem der Ansprüche 3 bis 7, **dadurch gekennzeichnet, dass** der feste Elektrolyt ferner das Redoxpaar I₃⁻/I⁻ einschließt.

9. Vorrichtung nach einem der vorangehenden Ansprüche, **dadurch gekennzeichnet, dass** der feste Elektrolyt eine Stärke von 100 nm bis 50 µm aufweist.

10. Vorrichtung nach einem der vorangehenden Ansprüche, **dadurch gekennzeichnet, dass** das metallische Material der Gegenelektrode aus dem Kupfer, dem Eisen, dem Silber, dem Platin und dem Gold ausgewählt ist.

11. Vorrichtung nach einem der vorangehenden Ansprüche, **dadurch gekennzeichnet, dass** das metallische Material der Gegenelektrode in Form eines massiven Materials, einer Dünnschicht oder auch in Form eines diskontinuierlichen Materials vorliegt, das von Nanodrähten gebildet ist, die auf einem Substrat angeordnet sind.

12. Vorrichtung nach einem der vorangehenden Ansprüche, **dadurch gekennzeichnet, dass** sie den Stromsammler im Kontakt mit der Arbeitselektrode umfasst und dass der Stromsammler aus den transparenten leitenden Oxiden ausgewählt ist.

13. Vorrichtung nach Anspruch 12, **dadurch gekennzeichnet, dass** die transparenten leitenden Oxide aus dem mit Zinn dotierten Indiumoxid In₂O₃:Sn, dem fluordotieren Zinnoxid SnO₂:F und dem mit Gallium, Aluminium oder Silizium dotierten Zinkoxid ausgewählt sind.

14. Vorrichtung nach einem der Ansprüche 1 bis 11, **dadurch gekennzeichnet, dass** das elektrochrome Material der Arbeitselektrode mindestens ein elektrochromes Polymer, das ferner Eigenschaften elektronischer Leitfähigkeit aufweist, und/oder mindestens ein Mittel, das eine elektronische Leitfähigkeit erzeugt, umfasst und dass die Anwesenheit des Stromsammlers im Kontakt mit der elektrochromen Arbeitselektrode nicht notwendig ist.

15. Vorrichtung nach Anspruch 14, **dadurch gekennzeichnet, dass** die elektrochromen Polymere, die ferner Eigenschaften elektronischer Leitfähigkeit aufweisen, aus dem Poly(3,4-ethylendioxythiophen), dem Poly(3,4-ethylendioxyselenophen), dem Poly(3,4-propylendioxythiophen), dem 4,7-bis-(2,3-Dihydrothien[3,4-b][1,4]dioxin-5-yl)-2-phenyl-1H-benzo[d]imidazol, dem 1,4-bis-(2-(3,4-Ethylendioxy)thienyl)benzen, den Copolymeren auf der Basis von Pyrrol und von 3,4-Ethylendioxythiophen, den Copolymeren auf der Basis von Pyrrol und von 3,4-Ethylendioxythiophen, den Copolymeren von 4-Aminodiphenylamin und von 4,4'-Diaminodiphenylsulfon, der Poly[2,5-di(2-thienyl)-1H-pyrrol-1-(p Benzoesäure)], den Poly(9H-N-alkylcarbazolen), Poly(3,6-dinitro-9H-N-alkylcarbazolen) und Poly(3,6-diamin-9H-N-alkylcarbazolen) ausgewählt sind.

16. Vorrichtung nach Anspruch 14 oder 15, **dadurch gekennzeichnet, dass** das eine elektronische Leitfähigkeit erzeugende Mittel aus dem leitenden Polymeren ausgewählt ist, die sich von elektrochromen Polymeren unterscheiden, die eine elektronische Leitfähigkeit nach Anspruch 15 aufweisen, und den dotieren halbleitenden Oxiden.

17. Vorrichtung nach Anspruch 15 oder 16, **dadurch gekennzeichnet, dass** die Arbeitselektrode und die Gegenelektrode Seite an Seite angeordnet sind, ohne im Kontakt zu sein, in einer selben Ebene, und mit dem Substrat und dem festen Elektrolyt im Kontakt sind, wobei der feste Elektrolyt selbst von einem Substrat getragen wird oder nicht.

18. Vorrichtung nach Anspruch 17, **dadurch gekennzeichnet, dass** das Substrat der Gegenelektrode ein opakes, durchscheinendes oder transparentes Material ist, das aus den Papieren, den Kunststoffen, den Textilien, dem Glas, den Metallen, der Keramik und dem Holz ausgewählt ist.

19. Verwendung einer elektrochromen Vorrichtung nach einem der vorangehenden Ansprüche für die Anzeige von Daten, die Herstellung von Kraftfahrzeug-Rückspiegeln und von Blenden, die Herstellung von Gebäudeverglasungen oder die optische Täuschung im Infrarotbereich.

## Claims

1. Electrochromic device comprising at least one electrochromic working electrode (2), a counter-electrode (4), a solid electrolyte (3) and optionally no more than one current collector (6), said device also comprising means allowing the application of an electric voltage to said electrodes, a device in which:
- the working electrode comprises an electrochromic material containing at least one electrochromic polymer and, when the current collector is present, said working electrode is in contact with said current collector;
- the solid electrolyte is in contact with each of said electrodes;
said electrochromic device being **characterized in that**:
- the counter-electrode is in conductive metal material (MC) having a redox potential corresponding to the high potential of the operating potential window of said electrochromic device.

2. The device according to claim 1, **characterized in that** the electrochromic polymers of the working electrode are selected from among poly(3,4-ethylene dioxythiophene), poly(3,4-ethylene dioxyselenophene), poly(3,4-propylene dioxythiophene), 4,7-bis-(2,3-dihydrothieno[3,4-b][1,4]dioxin-5-yl)-2-phenyl-1H-benzo[d]imidazole, 1,4-bis-(2-(3,4-ethylenedioxy)thienyl)benzene, copolymers of pyrrole and 3,4-ethylenedioxythiophene, copolymers of 4-aminodiphenylamine and 4,4'-diaminophenylsulfone, poly[2,5-di(2-thienyl)-1H-pyrrole-1-(p benzoic) acid, poly(9H-N-alkylcarbazoles); copolymers of tris-[4-(2-thienyl)phenyl]amine and 2,2'bithiophene, poly(tris(4-selen-2-yl)phenylamine, poly(2,3,5,6-tetrafluoroaniline), poly(3,4-ethylenedioxypyrrole), poly(aniline-co-ethyl-4-aminobenzoate), poly(1-(3-pyridinyl)-2,5-di(2-thienyl)-1H-pyrrole) and poly(1-(1,10-phenanthrolinyl)-2,5-di(2-thienyl)-1H-pyrrole).

3. The device according to claim 1 or 2, **characterized in that** the solid electrolyte is selected from among:
i) ionic liquids gelled or plasticised by at least one gelling or plasticising agent;
ii) electrolytic solutions of at least one electrolyte salt and/or of at least one acid in solution in a solvent, said solutions being gelled or plasticised by at least one gelling or plasticising agent; and
iii) thin layers of a material selected from among some hydrated oxides such as Ta₂O₅ hydrate and ZrO₂ hydrate.

4. The device according to claims 3, **characterized in that** the ionic liquids are selected from among bis-(trifluoromethanesulfonyl)imide of 1-ethyl-3-methylimidazolium, bis-(trifluoromethanesulfonyl)imide of 1-butyl-3-methylimidazolium, hexafluorophosphate of 1-butyl-3-methylimidazolium, and mixtures thereof.

5. Thedevice according to claim 3, **characterized in that** the electrolyte salts are selected from among lithium salts, sodium salts, phosphoric acid and sulfuric acid.

6. The device according to claim 3, **characterized in that** the solvent of the electrolytic solutions is a polar aprotic solvent selected from among cyclic and linear carbonates, cyclic ethers, polyethylene glycol ethers of formula RO(CH₂CH₂O)ₙR' where R and R' are CH₃ or C₂H₅ and 1 ≤ n ≤ 12, tetraalkyl sulfamides or formula RR'NSO₂NR"R''' where R, R', R" and R''' are CH₃ or C₂H₅, 3-methly-1,3-oxazolidine-2-one and cyclic esters or an aqueous solvent.

7. The device according to claim 1, **characterized in that** the solid electrolyte is a gelled or plasticised ionic liquid and it further contains at least one lithium salt.

8. The device according to any of claim 3 to 7, **characterized in that** the solid electrolyte also contains the I₃⁻/I⁻ redox couple.

9. The device according to any of the preceding claims, **characterized in that** the solid electrolyte has a thickness of 100 nm to 50 µm.

10. The device according to any of the preceding claims, **characterized in that** the metal material of the counter-electrode is selected from among copper, iron, silver, platinum and gold.

11. The device according to any of the preceding claims, **characterized in that** the metal material of the counter-electrode is in the form of a bulk material, a thin layer or in the form of a discontinuous material formed of nanowires arranged on a substrate.

12. The device according to any of the preceding claims, **characterized in that** it comprises said current collector in contact with the working electrode, and **in that** said current collector is selected from among transparent conductive oxides.

13. The device according to claim 12, **characterized in that** the transparent conductive oxides are selected from among tin-doped indium oxide In₂O₃:Sn, fluorine-doped tin oxide SnO₂:F and zinc oxide doped with gallium, aluminium or silicon.

14. The device according to any of claims 1 to 11, **characterized in that** the electrochromic material of the working electrode comprises at least one electrochromic polymer also having electronic conducting properties and/or at least one agent generating electronic conductivity, and **in that** the presence of said current collector in contact with the electrochromic working electrode is not necessary.

15. The device according to claim 14, **characterized in that** the electrochromic polymers also having electronic conducting properties are selected from among poly(3,4-ethylene dioxythiophene), poly(3,4-ethylene dioxyselenophene), poly(3,4-propylene dioxythiophene), 4,7-bis-(2,3-dihydrothieno[3,4-b][1,4]dioxin-5-yl)-2-phenyl-1H-benzo[d]imidazole, 1,4-bis-(2-(3,4-ethylenedioxy)thienyl)benzene, **copolymers of pyrrole and** 3,4-ethylenedioxythiophene, copolymers of 4-aminodiphenylamine and 4,4'-diaminophenylsulfone, poly[2,5-di(2-thienyl)-1H-pyrrole-1-(p benzoic) acid, poly(9H-N-alkylcarbazoles); poly(3,6-dinitro-9H-N-alkylcarbazoles and poly(3,6,-diamino-9H-N-alkylcarbazoles).

16. The device according to claim 14 or 15, **characterized in that** the agent generatingelectronic conductivity is selected from among conducting polymers differing from the electrochromic polymers having electronic conductivity such as defined in claim 15, and doped semiconductor oxides.

17. The device according to claim 15 or 16, **characterized in that** the working electrode and the counter-electrode are arranged side-by-side without being in contact, in one same plane, and are in contact with the substrate and the solid electrolyte, the solid electrolyte itself being or not being carried by a substrate.

18. The device according to claim 17, **characterized in that** the substrate of the counter-electrode is an opaque, translucent or transparent material selected from among paper, plastic, textiles, glass, metals, ceramics and wood.

19. Use of an electrochromic device such as defined in any of the preceding claims, for data display, for the manufacture of motor vehicle mirrors and visors, the manufacture of construction glazing, or for optical infraredcamouflage.
